# EUROPEAN PATENT SPECIFICATION

(11) **EP 0 835 766 B1**
(45) Date of publication and mention of the grant of the patent: **04.09.2002**
(21) Application number: 97307885.0
(22) Date of filing: 07.10.1997
(51) Int. Cl.: B60C 9/09, B60C 15/00, B60C 9/00

(54) **Motorcycle radial tyre**
Radialer Motorradreifen
Bandage pneumatique radial pour moto

(30) Priority: 08.10.1996 GB 9620978
(43) Date of publication of application: 15.04.1998
(73) Proprietor: SUMITOMO RUBBER INDUSTRIES LIMITED, Kobe-shi, Hyogo-ken (JP)
(72) Inventor: Watkins, David Robert, Sutton Coldfield, West Midlands B74 3EG (GB); Brown, Robert, Tamworth, Staffs B77 2QH (GB)
(74) Representative: Stewart, Charles Geoffrey

(56) References cited:
- EP-A- 0 425 155
- EP-A- 0 483 710
- US-A- 4 744 400
- US-A- 4 770 222

## Description

The present invention relates to a radial motorcycle tyre and in particular but not exclusively to high performance or race motorcycle tyres.

Such tyres utilise a very wide tread which in transverse cross-section is sharply curved to provide good contact with the road surface when the motorcycle is steeply banked in cornering. Maintenance of a consistent ground contact area or tyre footprint under all conditions is a major problem in determining general vehicle handling. Particularly important in motorcycle race tyres operation construction is the provision of high cornering power with good stability to maximise cornering speeds.

Radial motorcycle tyres of this type have short sidewalls extended to the tread edges radially and axially outwardly from the tyre beads. Sidewalls are reinforced by radial carcass plies which when tensioned by inflation pressure act with the sidewall geometry to provide location of the curved tread region to withstand cornering forces.

The steeply curved tread region of the tyre is reinforced by a reinforcing breaker to give the required structural rigidity to allow for banking over of the motorcycle when cornering whilst giving sufficient flexibility to allow localised tread flattening in the ground contact patch for good road grip.

Whilst such tyres work quite well they are prone to instability, particularly in the sidewall regions which together with the normal damping properties can in severe cornering conditions cause a vibration on the motorcycle which is like a chatter. The chatter vibration is usually in the frequency range of 16 to 20 Hz and this of course affects the adhesion of the tyre to the road and the handling towards the limits of cornering.

It is an object of the present invention to still further improve tyre stability and cornering capacity whilst overcoming the chatter vibration.

Accordingly the present invention provides a radial motorcycle tyre comprising a pair of beads, a carcass and a tread reinforced between its edges by a breaker assembly and having in its normally inflated fitted condition a camber value C/L of between 0.5 and 0.7, a radial main carcass ply reinforced by cords having an extensibility in the range of 4 to 20% measured at a load of 70 Newtons, said cords being laid at 85-90° to the centreline of the tyre, a second carcass ply reinforced by cords having an extensibility in the range of 0.3 to 3% at a load of 130 Newtons, said cords being laid at 20-30° to the centreline of the tyre and the reinforcement extending from one bead region to the other bead region, the breaker ply being reinforced by cords having an extensibility in the range of 0.3 to 3% at a load of 130 Newtons, the direction of the cords in the breaker ply being in the opposite sense to the cords of the second carcass ply.

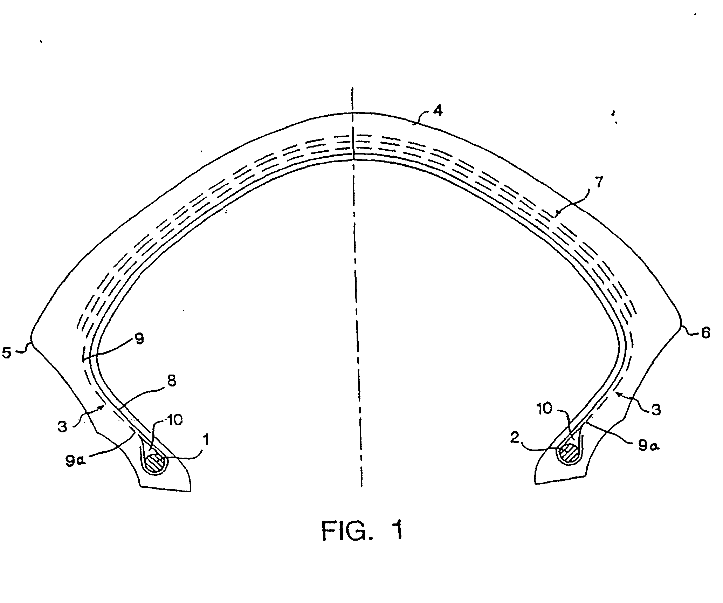

Further aspects of the present invention will become apparent from the following description by way of example only of one embodiment in conjunction with the tyre of Figure 1 which is a cross-section of a motorcycle race radial tyre.

The tyre shown is a 115/50R17 rear tyre intended for a racing motorcycle having a 125cc engine. The tyre comprises a pair of tyre bead regions 1 and 2, sidewalls regions 3 and a tread 4. The tread 4 is reinforced between its edge regions 5 and 6 by a breaker assembly 7 which may comprise one or two plies of breaker fabric.

A main tyre carcass ply 8 is reinforced by nylon cords having an extensibility of 6.6% when tested under a load of 70 Newtons. The cords extend around the tyre section substantially at 90° to the tyre tread centreline such that they provide a radial tyre carcass. It should be understood that the cord angles may be anywhere in the range of 85 to 90° to the centreline of the tyre. The main carcass ply 8 has immediately over it a second carcass ply 9 which extends from the first bead region around the tyre to the second bead region 2 and lies immediately adjacent to and over the main carcass ply 8. It should be noted that the edges 9A of the second ply 9 are positioned adjacent to the radially outer edges of bead apices 10. The cords of the second carcass ply 9 are laid so that they lie at 20 to 30° to the centreline of the tyre. The cords of the second carcass ply 9 comprise aramid and have an extensibility of 2.3% at a load of 130 Newtons. Materials having extensibilities in the range of 0.3 to 3% at a test load of 130 Newtons can be used for these plies.

The cords of the breaker reinforcement 7, whether it be a single breaker or two-ply breaker construction, are laid in the range of 20 to 30° to the centreline of the tyre. The first breaker or the first breaker of two is always laid with its direction to the opposite sense considered in the direction of the centreline of the tyre to the second carcass ply. When two breaker layers are used the outer one is thus in the same sense as the second carcass ply.

In a preferred construction the nylon carcass cords are 2 x 140 Tex and the aramid cords for both the second carcass ply and the breaker or breakers are 2 x 110 Tex aramid.

The manufacture of the tyre is made in two stages. The carcass comprising the main carcass 8 and the second carcass ply 9 is built flat or in a slightly curved shape. The latter is sometimes called a 'crown former' construction. The aramid second carcass ply is applied and then the tyre is shaped and the breaker ply or plies attached.

The result is a race tyre which has substantial improvements in resistance to wear then conventional tyres. It has also been found to have improved traction grip and be less susceptible to the so-called going off occurrence which is when the tyre grip deteriorates with use. The construction may be used for a front or rear tyre.

## Claims

1. A radial motorcycle tyre comprising a pair of beads (1,2), a carcass (3) and a tread reinforced between its edges by a breaker assembly (7) and having in its normally inflated fitted condition a camber value C/L of between 0.5 and 0.7, a radial main carcass ply reinforced (8) by cords having an extensibility in the range of 4 to 20% measured at a load of 70 Newtons, said cords being laid at 85-90° to the centreline of the tyre, a second carcass ply (9) reinforced by cords having an extensibility in the range of 0.3 to 3% at a load of 130 Newtons, said cords being laid at 20-30° to the centreline of the tyre and the reinforcement extending from one bead region (1) to the other bead region (2), the breaker ply (7) being reinforced by cords having an extensibility in the range of 0.3 to 3% at a load of 130 Newtons, the direction of the cords in the breaker ply being in the opposite sense to the cords of the second carcass ply.

2. A radial motorcycle tyre according to claim 1, **characterised by** a second breaker ply radially over the first breaker ply and laid with its cords in the opposite sense.

3. A radial motorcycle tyre according to claim 1 or 2, **characterised in that** the carcass reinforcing cords have an extensibility of 6.6% at 70 Newtons and the second carcass ply and breaker carcass ply cords have an extensibility of 2.3% at 130 Newtons.

4. A radial motorcycle tyre according to claim 1, 2 or 3, **characterised in that** the cords of the main carcass ply (8) comprise nylon.

5. A radial motorcycle tyre according to any one of the previous claims, **characterised in that** the cords of the second carcass ply (9) are of aramid.

6. A radial motorcycle tyre according to any of claims 1 to 5, wherein the main carcass ply (8) has edge regions turned up from the inside to the outside around each tyre bead core and the edge of said ply terminates adjacent to the top or radially outermost tip of a tyre bead apex (10).

7. A method of manufacturing a radial motorcycle tyre according to any one of claims 1 to 6, comprising assembling a tyre carcass on a flat or crowned type tyre former by applying a first main carcass ply (8) to the former, applying a second carcass ply (9) with cords at 20 to 30° over the main carcass ply and extend from bead to bead, turning up the main carcass ply (8) to give a low turn up, shaping the carcass assembly thus made into a toroidal shape, applying a breaker over the carcass reinforcement and subsequently a tread strip to form a green tyre assembly.

## Patentansprüche

1. Motorrad-Radialreifen, umfassend zwei Wülste (1, 2), eine Karkasse (3) und einen Laufstreifen, der zwischen seinen Kanten durch einen Breakeraufbau (7) verstärkt ist und in seinem normal aufgepumpten, aufgezogenen Zustand einen Sturzwert (C/L) zwischen 0,5 und 0,7 aufweist, eine radiale Hauptkarkasslage (8), die durch Korde verstärkt ist, die eine Dehnbarkeit im Bereich von 4 bis 20 %, bei einer Last von 70 Newton gemessen, aufweisen, wobei die Korde unter 85 - 90° zur Mittellinie des Reifens gelegt sind, eine zweite Karkasslage (9), die durch Korde verstärkt ist, die eine Dehnbarkeit im Bereich von 0,3 bis 3 % bei einer Last von 130 Newton aufweisen, wobei die Korde unter 20 - 30° zur Mittellinie des Reifens gelegt sind, und wobei sich die Verstärkung von einem Wulstbereich (1) zum anderen Wulstbereich (2) erstreckt, wobei die Breakerlage (7) durch Korde verstärkt ist, die eine Dehnbarkeit im Bereich von 0,3 bis 3 % bei einer Last von 130 Newton aufweisen, wobei die Richtung der Korde in der Breakerlage im entgegengesetzten Richtungssinn zu den Korden der zweiten Karkasslage liegt.

2. Motorrad-Radialreifen nach Anspruch 1, **gekennzeichnet durch** eine zweite Breakerlage radial über der ersten Breakerlage, deren Korde im entgegengesetzten Richtungssinn gelegt sind.

3. Motorrad-Radialreifen nach Anspruch 1 oder 2, **dadurch gekennzeichnet, dass** die Karkassverstärkungskorde eine Dehnbarkeit von 6,6 % bei 70 Newton aufweisen, und dass die Korde der zweiten Karkasslage und der Breakerkarkasslage eine Dehnbarkeit von 2,3 % bei 130 Newton aufweisen.

4. Motorrad-Radialreifen nach Anspruch 1, 2 oder 3, **dadurch gekennzeichnet, dass** die Korde der Hauptkarkasslage (8) Nylon umfassen.

5. Motorrad-Radialreifen nach einem der vorhergehenden Ansprüche, **dadurch gekennzeichnet, dass** die Korde der zweiten Karkasslage (9) aus Aramid bestehen.

6. Motorrad-Radialreifen nach einem der Ansprüche 1 bis 5, wobei die Hauptkarkasslage (8) Kantenbereiche aufweist, die von der Innenseite zur Außenseite um jeden Reifenwulstkern umgeschlagen sind, und wobei die Kante der Lage neben der oberen oder radial äußersten Spitze eines Reifenwulstkernreiters (10) endet.

7. Verfahren zum Herstellen eines Motorrad-Radialreifens nach einem der Ansprüche 1 bis 6, umfassend, dass eine Reifenkarkasse auf einer Reifenaufbautrommel vom flachen oder mit einer Krone versehenen Typ aufgebaut wird, indem eine erste Hauptkarkasslage (8) auf die Aufbautrommel aufgelegt wird, eine zweite Karkasslage (9) mit Korden unter 20 - 30° über der Hauptkarkasslage und sich von Wulst zu Wulst erstreckend aufgelegt wird, die Hauptkarkasslage (8) umgeschlagen wird, so dass sich ein niedriger Umschlag ergibt, der somit hergestellte Karkassaufbau zu einer Torusform geformt wird, ein Breaker über der Karkassverstärkung und anschließend ein Laufstreifen aufgelegt wird, um einen Rohreifenaufbau zu bilden.

## Revendications

1. Pneumatique à carcasse radiale pour motocyclette, comprenant une paire de talons (1, 2), une carcasse (3) et une bande de roulement renforcée entre ses bords par un ensemble (7) de nappe-sommet et ayant, à son état monté et normalement gonflé, une valeur de cambrure C/L comprise entre 0,5 et 0,7, une nappe radiale principale de carcasse armée (8) par des câbles ayant une extensibilité comprise entre 4 et 20 %, mesurée pour une charge de 70 N, les câbles étant disposés avec un angle de 85 à 90° par rapport à l'axe central du pneumatique, une seconde nappe de carcasse (9) armée par des câbles ayant une extensibilité comprise entre 0,3 et 3 % pour une charge de 130 N, les câbles étant disposés avec un angle de 20 à 30° par rapport à l'axe central du pneumatique et l'armature s'étendant d'une première région de talon (1) vers l'autre région de talon (2), la nappe-sommet (7) étant renforcée par des câbles ayant une extensibilité comprise entre 0,3 et 3 % pour une charge de 130 N, la direction des câbles de la nappe-sommet étant opposée à celle des câbles de la seconde nappe de carcasse.

2. Pneumatique à carcasse radiale pour motocyclette selon la revendication 1, **caractérisé par** une seconde nappe-sommet disposée radialement sur la première nappe sommet et disposée avec ses câbles en sens opposé.

3. Pneumatique à carcasse radiale pour motocyclette selon la revendication 1 ou 2, **caractérisé en ce que** les câbles d'armature de carcasse ont une extensibilité de 6,6 % à 70 N et les câbles de la seconde nappe de carcasse et de la nappe-sommet de carcasse ont une extensibilité de 2,3 % à 130 N.

4. Pneumatique à carcasse radiale pour motocyclette selon la revendication 1, 2 ou 3, **caractérisé en ce que** les câbles de la nappe principale de carcasse (8) comportent du "Nylon".

5. Pneumatique à carcasse radiale pour motocyclette selon l'une quelconque des revendications précédentes, **caractérisé en ce que** les câbles de la seconde nappe de carcasse (9) sont formés d'aramide.

6. Pneumatique à carcasse radiale pour motocyclette selon l'une quelconque des revendications 1 à 5, dans lequel la nappe principale de carcasse (8) a des régions de bord replié de l'intérieur vers l'extérieur autour de chaque tringle et le bord de la nappe se termine près de la partie supérieure ou du bout radialement le plus externe d'une pointe de bourrage de talon (10) du pneumatique.

7. Procédé de fabrication d'un pneumatique à carcasse radiale pour motocyclette selon l'une quelconque des revendications 1 à 6, comprenant l'assemblage d'une carcasse de pneumatique sur un organe formateur de pneumatique de type plat ou bombé, par application d'une première nappe principale de carcasse (8) sur l'organe formateur, application d'une seconde nappe de carcasse (9) ayant des câbles formant un angle de 20 à 30° sur la nappe principale de carcasse et s'étendant d'un talon à l'autre, pliage vers le haut de la nappe principale de carcasse (8) afin qu'elle donne un pli de faible hauteur, mise en forme de l'ensemble de carcasse ainsi réalisé à une configuration toroïdale, application d'une nappe-sommet sur l'armature de carcasse, puis d'une bande de bande de roulement destinée à former un ensemble de pneumatique non vulcanisé.
